(19) Europäisches Patentamt
European Patent Office
Office européen des brevets

(11) Publication number: **0 404 004 A2**

(12) **EUROPEAN PATENT APPLICATION**

(21) Application number: **90111427.2**

(22) Date of filing: **18.06.90**

(51) Int. Cl.5: **C08L 83/07, C08L 23/04, C08K 5/01, C08K 5/14**

(30) Priority: **19.06.89 JP 154703/89**

(43) Date of publication of application: **27.12.90 Bulletin 90/52**

(84) Designated Contracting States: **AT BE CH DE DK ES FR GB GR IT LI LU NL SE**

(71) Applicant: **NIPPON UNICAR COMPANY LIMITED**
**Asahi-Tokai Building 6-1 Ohtemachi 2-Chome**
**Chiyoda-ku Tokyo 100(JP)**

(72) Inventor: **Senume, Akitaka**
**21-3 Saitohbuncho, Kanagawa-Ku**
**Yokohama-Shi, Kanagawa-Ken(JP)**
Inventor: **Nagai, Toshiyuki**
**2-2-12, Kozonominami**
**Ayase-Shi, Kanagawa-Ken(JP)**
Inventor: **Tsukada, Kiroku**
**1-17-2-406 Saido, Kohnan-Ku**
**Yokohama-Shi, Kanagawa-Ken(JP)**
Inventor: **Hayashi, Akio**
**3-9-32, Nakazato, Minami-Ku**
**Yokohama-Shi, Kanagawa-Ken(JP)**
Inventor: **Noda, Isao**
**2-9-11 Sakuragaoka**
**Yokohama-Shi, Kanagawa-Ken(JP)**

(74) Representative: **von Hellfeld, Axel, Dipl.-Phys. Dr. et al**
**Wuesthoff & Wuesthoff Patent- und Rechtsanwälte Schweigerstrasse 2**
**D-8000 München 90(DE)**

(54) **A shape memory elastic body.**

(57) A shape memory elastic body which comprises a reaction product obtained by reacting a composition comprises
100 weight parts of ethylene polymer,
1 - 400 weight parts of organopolysiloxane having a viscosity higher than 1,000 CS at 23 °C and expressed by Formula (A)

$$R^1_a R^2_b SiO_{\frac{4-a-b}{2}} \qquad (A)$$

(where $R^1$ is an unsaturated aliphatic group, $R^2$ is an unsubstituted or a substituted monovalent hydrocarbon group containing no unsaturated aliphatic group, $0<a<1$, $0.5<b<3$, and $1<a+b<3$),
0.01 - 30 weight parts of a hydrocarbon compound expressed by Formula (B)
$CH_2=CH(CH_2)_cCH=CH_2$ (B)
where c is an integer of 1 - 30), and
0.005 - 0.05 wight parts of an organic peroxide, and which has a melt index equal to or higher than 0.001.

EP 0 404 004 A2

Xerox Copy Centre

# A SHAPE MEMORY ELASTIC BODY

## BACKGROUND OF THE INVENTION

### Field of Industrial Uses

This invention relates to a shape memory elastic body which has moldable flowability, the shape of a molding of which can be fixed at the room temperature,- and a molding of which can be caused to restore the original shape or deform into a transient shape thereof.

The shape memory elastic body can be used in sealing materials, medical tools, such as splints, construction fittings, such as hooks, electric magnet shield members, shrinkable films, brassieres, portable containers, etc. and can be used in fields where moldings thereof are heated to restore their original shapes for their functions.

### Prior Art

As a shape memory resin, or a shape memory elastic body is known, for example, the crosslinked polyethylene used as a basic material of the thermoshrinkable sleeve on which the inventors filed Japanese Patent Publication No. 54008/1983. Also known are vulcanized trans-1,4-polyisopropylene described in Japanese Patent Publication No. 192440/1987, vulcanized crystalline polychloroprene rubber, and polynorbonene whose molecular entanglement is used.

In order to use moldings of the crosslinked polyethylene and vulcanized rubber as shape memory resins or shape memory elastic bodies, it is necessary to mold polyethylene or rubber and then to fix the molecular structures by crosslinking or vulcanization. Further, the fixation is followed by the step of giving shapes by stretching the moldings at low temperatures. Thus, the process is complicated. Besides, in many cases, expensive equipements, such as electron beam irradiating devices, are necessary. In the case where polystyrene and polynorbonene whose molecular entanglements are used, it is necessary that the molecular weights of the polymers are large, which causes problems that their flowabilities lower, their hardnesses extremely increase, etc.

## OBJECTIVES

In view of these problems, this invention aims at providing a shape memory elastic body which has good moldability and is moldable as it is without the necessities of fixing molecular structures by crosslinking or vulcanization after molding.

## SUMMARY

The shape memory elastic body according to this invention, which comprises a graft polymer of the specific polyolefin and silicone, required neither the crosslinking nor vulcanization which is essential to the conventional polyolefin shape memory bodies. Accordingly, the shape memory elastic body according to this invention makes it possible that shape memory moldings having specific shapes which have not been able to be formed by the conventional process using the crosslinking are fomed. Furthermore, the conventional polyolefin shape memory body is usually non-eleastic, but the shape memory body according to this invention is elastic. This permits the shape memory body according to this invention find new applications.

That is, the shape memory elastic body according to this invention can be used in sealing material, medical tools, such as splints, construction fittings, such as hooks, brassiers, portable containers, etc. and can be used in fields where moldings thereof are heated to restore their original shapes for their functions.

## DETAILED DESCRIPTION OF THE INVENTION

After earnest study, the inventors have found that a graft polymer of a specific polyolefin and silicon produces a shape memory elastic boty which requires neither the crosslinking nor the vulcanization which is essential to the conventinal polyolefin shape memory elastic bodies, and, based on this finding, they have compelted this invention. That is, this invention relates to

1. a shape memory elastic body which comprises a reaction product obtained by reacting a composition comprises
100 weight parts of ethylene polymer,
1 - 400 weight parts of organopolysiloxane having a viscosity higher than 1,000 CS at 23 °C and expressed by Formula (A)

$$R^1_a R^2_b SiO_{\frac{4-a-b}{2}} \qquad (A)$$

(where $R^1$ is an unsaturated aliphatic group, $R^2$ is an unsubstituted or a substituted monovalent hydrocarbon group containing no unsaturated aliphatic group, $0<a<1$, $0.5<b<3$, and $1<a+b<3$),
0.01 - 30 weight parts of a hydrocarbon compound expressed by Formula (B)
$CH_2 = CH(CH_2)_cCH=CH_2$ (B)
where c is an integer of 1 - 30), and
0.005 - 0.05 wight parts of an organic peroxide, and which has a melt index equal to or higher than 0.001,

2. a shape memory elastic molding prepared by molding the shape memory elastic body according to claim 1 in a required shape and stretching or shrinking the molding at a temperature below a temperature at which the memory shape elastic body finishes melting, and

3. A shape memory elastic molding using process comprising heating the shape memory elastic molding according to claim 2 up to a temperature at which the crystal melting of said elastic body takes place by 30% or more to cause the molding to restore the original shape thereof or to deform into a transient shape thereof.

While the inventors have been studying the properties of the composition comprising an ehtylene polym, a vinyl group-content silicon compound, a diene-content hydrocarbon and an organic peroxide on which the inventors have filed Japanese Patent Application No. 305185/1988, they have found that the composition has shape memory property, and, based on this finding, they have completed this invention.

The ethylene polymer used in the composition according to this invention contains ethylene as the main component and is exemplified by high-pressure process polyethylene, linear low-density polyethylene (LLDPE), ethylene-°C-olefin copolymer, ethylene-vinyl acetate copolymer, ethylene-acrylic acid copolymer, ethylene-methacrylic acid copolymer, ethylene-methyl acrylate copolymer, ethylene-methyl methacrylate copolymer, ethylene-ethyl acrylate copolymer, ethylene-ethyl methacrylate, ethylene-vinyl alcohol copolymer, ethylene-propylene-diene terpolymer, etc. which have crystal melting points above 40 °C.

In the organosilicon compound expressed by Formu (A) in this invention, R represetns one of a methyl group. an ethyl group. an n-propyl group, an i-propyl group and other alkyl groups, or two of them, or a vinyl group. At least one of the R's is vinyl group.

The organosilicon compound used in this invention may be those marketed as, e.g., modifiers for the tear strength of silicone rubber.

The viscosity of the organosilicone compound expressed by Formula (A) used in this invention at 23 °C is equal to or higher than 1,000 CS, preferably 10,000 - 1,000,000 CS. When the viscosity is lower than 1,000 CS, the composition is difficult to be heat-kneaded, and often the organosilicon compound exudes from surfaces of the resultant moldings.

The hydrocarbon compound expressed by Formula (B) used in this invention is exemplified by 1,4-pentadiene, 1,5 hexadiene, 1,6-heptadiene, 1,7-octadiene, 1,8-nonadiene, 1,9-decadiene, 1,10-undecadiene, 1,11-dodecadiene, 1,12-tridecadiene, 1,13-tetradecadiene, or others.

The organic peroxide used in this invention has a decomposition temperature of 100 - 220 °C in a half life of 10 minutes and is exemplified by the following. Their decomposition temperatures (°C) are shown in parentheses.

Succinic acid peroxide (110), benzoyl peroxide (110), t-butyl peroxy-2-ethyl hexanoate (113), p-chlorobenzoyl peroxide (115), t-butyl peroxy isobutylate (115), t-butyl peroxyisopropyl carbonate (135), t-butyl perooxylaurate (140), 2,5-dimethyl-2,5-di(benzoylperoxy)hexane (140), t-butyl peroxyacetate (140), di-t-butyl diperoxyphthalate (140), t-butyl peroxymaleic acid (140), cyclohexanon peroxide (145), t-butyl peroxybenzoate (145), dicumyl peroxide (150), 2,5-dimethyl-2,5-di(t-butyl peroxy)hexane (155), t-butyl cumylperoxide (155), t-butyl hydroperoxide (158),di-t-butyl peroxide (160), 2,5-dimethyl-2,5-di(t-butyl peroxy)hexine-3 (170), di-isopropyl benzene hydroperoxide (170), p-menthane hydroperoxide (180), 2,5-dimethyl hexane-2,5-dihydroperoxide (213)

The organosilicon compound expressed by Formula (A) used in this invention is added by 1 part or more, preferably 2 - 400 parts to 100 weight parts of the ethylene polymer. When the compound is added by less than 1 part exclusive of 1 part, the characteristics of silicone are not exhibited easily. When the compound is added by more than 400 parts, the elastic body becomes difficult to be formed into films.

The hydrocarbon compound expressed by Formula (B) used in this invention is added by 0.01 or more parts, preferably 0.05 - 30 parts. When the compound is added by less than 0.01 parts exclusive of 0.01 parts, the resultant molding often has masses of crosslinked silicone.

The organic peroxide used in this invention is added by 0.005 - 0.05 weight parts to 100 weight parts of the ethylene polymer. When the ethylene polymer is added by less than 0.005 parts, the reaction time often becomes longer. When it is added by more than 0,05 parts, the moldability of the elastic body is often impaired.

The composition according to this invention may contain, as required, oxidation stabilizers, UV stabilizers, inorganic fillers, pigments, flame retardants, rubbers, etc.

In this invention, the composition is reacted by heat-kneading suitably by means of kneaders, extruders. The composition which contains no organic peroxide may be reacted by electron beam irradiation. The heat-kneading is conducted generally at a temperature of 100 - 220 °C and the period of time of the heatkneading may be 10s minutes.

According to this invention, the reaction product has a melt index equal to or higher than 0.001, preferably equal to or higher than 0.05. When the melt index is less than 0,001 exclusive of 0,001, the moldability of the elastic body is often impaired.

Examples of this invention will be explained below. DSC melting curves were measured by DSC 20 differential scanning calarimeter made by Seiko Denshi Kogyo at a sample amount of about 5 mg, a N flow rate of 20 ml. The room temperature was raised up to 150 °C at about 100 °C/min., kept at 150 °C for 10 minutes, then decreased down to 0 °C at 10 °C/min., and immediately raised at 10 °C/min. Thus thermograms were obtained. In all the samples, their melting peaks begin to apear at about 10 °C, reach their mximum values and decrease. The maximum values are taken as their melting points, and the temperatures at which the melting enthalpes disappear are taken as melting finish temperatures.

## EXAMPLES

### Example 1

One hundred (100) weight parts of ethylene-vinyl acetate copolymer (made by Nippon Unicar) having a melt index of 15 g/10 mins. (190 °C, 2160 g) and 18 wt% of vinyl acetate content, 100 weight parts of silicone gum stock (made by Nippon Unicar) having a viscosity of 300,000 CS at 23 °C and a 1.0 % of methyl vinylsilicone, 1 part of 1,13-tetradecadiene, 0.05 parts of dicumyl peroxide, 0.05 parts of IRGANOX 1010 (an antioxidant made by Ciba Gaigy) were kneaded at 100 °C for 10 minutes and at 170 °C for 20 minutes. The kneaded result had a melt index of 0.1 g/10 mins., a melting point of 73 °C, and a melting finish temperature of 90 °C, a tensile strength of 60 kg/cm$^2$, an elongation of 500 %, and a hardness of 45 (Shore A). The pellets of this kneaded result were extruded into a rod having a 2.0 mm diameter at 160 °C by the extruder of a Brabender Plastograph.

This rod stretched into a rod of a dimater of 1.1 mm at 23 °C. A 5-cm rod was cut off this stretched rod. This rod was dipped in water of required temperatures for 30 minutes to measure its length. Table 1 shows the result.

Table 1

| Water Temperature (° C) | Rod Length (° C) | Rod Diameter (° C) |
|---|---|---|
| 40 | 3.76 | 1.4 |
| 50 | 2.90 | 1.5 |
| 60 | 2.44 | 1.7 |
| 70 | 2.07 | 1.9 |
| 80 | 1.92 | 2.2 |

Example 2

One hundred (100) weight parts of ethylene-ethyl acrylate copolymer (made by Nippon Unicar) having a melt index of 20 g/10 mins. (190 ° C, 2160 g) and an ethyl acrylate content of 35 wt%, 100 parts of silicone gum stock (made by Nippon Unicar) having a viscosity of 300,000 CS at 23 ° C and a methyl vinylsilicone content of 1.0 %, 0.5 parts of 1,13-tetradecadiene, 0.03 parts of dicumyl peroxide, and 0.05 parts of IRGANOX 1010 (an antioxidant made by Ciba Gaigy) were kneaded by a Brabender Plastograph at 120 ° C for 10 minutes and at 180 ° C for 15 minutes. The kneaded result had a melt index of 0.08 g/10 mins. a melting point of 78 ° C and a melting finish temperature of 90 ° C. The pellets of this kneaded result were extruded at 160 ° C into a tape having a width of 2 cm and a thickness of 2.0 mm by the extruder of a Brabender Plastograph. This tape was stretched into a tape of a width of 1.1 mm at 23 ° C. A 5 cm-length tape was cut off this stretched tape. The 5 cm-length tape was dipped in water of 90 ° C for 30 minutes and took out, and its length was measured. The measured length was 2.0 cm.

Exmaple 3

One hundred (100) weight parts of ethylene-vinyl acetate copolymer (made by Nippon Unicar) having a melt index of 20 g/10 mins. (190 ° C, 2160 g) and 18 wt% of vinyl acetate content, 100 weight parts of silicone gum stock (made by Nippon Unicar) having a viscosity of 300,000 CS at 23 ° C and a 1.0 % of methyl vinylsilicone, 0.1 part of 1,13-tetradecadiene, 0.05 parts of dicumyl peroxide, 0.05 parts of IRGANOX 1010 (an antioxidant made by Ciba Gaigy) were kneaded at 100 ° C for 10 minutes and at 180 ° C for 50 minutes. The kneaded result had a melt index of 0.1 g/10 mins., a melting point of 73 ° C, and a melting finish point of 10 ° C. The pellets of the kneaded result were extruded at 160 into a tape having a width of 2 cm and a thickness of 2.0. This tape was stretched at 23 ° C into a tape having a width of 1.1 mm. A 5 cm-length tape was cut off this stretched tape. The 5 cm-length tape was dipped in water of 90 ° C for 30 minutes and took out, and the length was measured. The measured length was 2.0 cm.

Example 4

One hundred (100) parts of ultra low-density polyethylene (made by Union Carbide) having a melt index of 7 g/10 mins. (190 ° C, 2160 g), 100 part of silicone gun stock (made by Nippon Unicar) having a viscosity of 300,000 CS at 23 ° C and a methyl vinylsilicone content of 1.0 %, 0.5 parts of 1,9-decadiene, 0.05 parts of dicumyl peroxide, and 0.05 parts of IRGANOX 1010 (an antioxidant made by Ciba Gaigy) were kneaded at 130 ° C for 10 minutes and at 190 ° C for 20 minutes. The kneaded result has a melt index of 0.07 g/10 mins, a melting point of 115 ° C, and a crystal melting finish point of 121 ° C. The pellets of this kneaded result were extruded at 160 ° C into a pate having a width of 2 cm and a thickness of 2.0 mm. This tape was streched at 23 ° C into a tape having a width of 1.1 mm. A 5 cm-length tape was cut off this stretched tape. The 5 cm-length tape was dipped in water of 95 ° C for 30 minutes and took out, and the length was measured. The measured length was 2.1 cm.

## Claims

1. A shape memory elastic body which comprises a reaction product obtained by reacting a composition comprises 100 weight parts of ethylene polymer, 1 - 400 weight parts of organopolysiloxane having a viscosity higher than 1,000 CS at 23 °C and expressed by Formula (A)

$$R^1_a R^2_b SiO_{\frac{4-a-b}{2}} \qquad (A)$$

(where $R^1$ is an unsaturated aliphatic group, $R^2$ is an unsubstituted or a substituted monovalent hydrocarbon group containing no unsaturated aliphatic group, $0<a<1$, $0.5<b<3$, and $1<a+b<3$), 0.01 - 30 weight parts of a hydrocarbon compound expressed by Formula (B)

$CH_2=CH(CH_2)_cCH=CH_2$ (B)

where c is an integer of 1 - 30), and 0.005 - 0.05 weight parts of an organic peroxide, and which has a melt index equal to or higher than 0.001.

2. The shape memory elastic body according to claim 1 in a required shape and stretching or shrinking the molding at a temperature below a temperature at which the memory shape elastic body finishes melting.

3. A shape memory elastic molding using process comprising heating the shape memory elastic modling according to claim 2 up to a temperature at which the crystal melting of said elastic body takes place by 30% or more to cause the molding to restore the original shape thereof or to deform into a transient shape thereof.